# DEMANDE DE BREVET EUROPEEN

(11) **EP 3 839 405 A1**
(43) Date de publication de la demande: **23.06.2021**
(21) Numéro de dépôt: 20215306.0
(22) Date de dépôt: 18.12.2020
(51) Int. Cl.: F28F 19/00

(54) **ECHANGEUR THERMIQUE DE TYPE À SURFACE RACLÉE COMPORTANT UN SYSTÈME D ACTIONNEMENT HYDRAULIQUE**

(30) Priorité: 19.12.2019 FR 1914916
(71) Demandeur: Commissariat à l'énergie atomique et aux énergies alternatives, 75015 Paris (FR)
(72) Inventeur: VESIN, Sébastien, 38054 GRENOBLE CEDEX 09 (FR); DUCROS, Frédéric, 38054 GRENOBLE CEDEX 09 (FR); MINVIELLE, Zoé, 38054 GRENOBLE CEDEX 09 (FR)
(74) Mandataire: Brevalex

(57) **Abrégé**

L'objet principal de l'invention est un échangeur thermique (1) de type à surface raclée, caractérisé en ce qu'il comporte : un tube (2), dans lequel circule un fluide encrassant (4), comprenant une paroi interne (2i) apte à être encrassée ; un système de raclage (5), disposé à l'intérieur du tube (2), apte à être en sensible contact avec la paroi interne (2i) du tube (2) pour la racler et éliminer l'encrassement; un système d'actionnement hydraulique (8) du système de raclage (5), comprenant des moyens mécaniques de mise en mouvement (6), solidarisés au système de raclage (5), et des moyens de circulation d'un fluide pressurisé (7) permettant l'entraînement des moyens mécaniques de mise en mouvement (6) et ainsi la mise en mouvement du système de raclage (5) contre la paroi interne (2i) du tube (2).

## Description

### DOMAINE TECHNIQUE

La présente invention se rapporte au domaine des échangeurs thermiques à surface raclée. De tels échangeurs sont notamment utilisés dans les procédés encrassants, c'est-à-dire lorsque les parois des échangeurs peuvent être le siège de phénomènes de dépôt de matières indésirables. Plus spécifiquement, elle se rapporte à un échangeur thermique utilisé dans un réacteur de gazéification de biomasse en eau supercritique.

L'invention peut être mise en oeuvre pour de nombreuses applications, et tout particulièrement dans les domaines industriels de l'agroalimentaire, de la chimie, de l'énergie, dont le secteur pétrolier et le secteur des transports, entre autres.

L'invention propose ainsi un échangeur thermique de type à surface raclée comportant un système d'actionnement hydraulique de son système de raclage, ainsi qu'un réacteur de gazéification de biomasse en eau supercritique comportant un tel échangeur thermique.

### ÉTAT DE LA TECHNIQUE ANTÉRIEURE

Les échangeurs thermiques à surface raclée sont bien connus et amplement mis en œuvre dans les procédés propices aux phénomènes d'encrassement des parois impliquées dans les transferts thermiques.

A titre d'exemples, les racleurs utilisés peuvent être rotatifs, par exemple de type vis sans fin ou à pales, ou bien encore oscillants de type piston, par exemple avec des plateaux, annulaires ou non. L'actionnement du racleur, rotatif ou oscillant de type piston, est généralement opéré par un moteur électrique.

Dans le cas des réacteurs de gazéification de biomasse en eau supercritique, afin de maximiser le temps de séjour, le flux encrassant peut être alimenté dans plusieurs tubes en parallèle. Chaque tube doit alors être équipé d'un racleur.

Les conditions opératoires dans ce type de réacteur sont de l'ordre de 600°C et 300 bars. Les contraintes thermomécaniques agissant sur les matériaux et assemblages des réacteurs sont donc importantes et complexifient la réalisation de l'étanchéité et de l'assemblage des systèmes, notamment vis-à-vis des mécanismes d'actionnement des racleurs. De plus, la multiplication du nombre de moteurs électriques génère une consommation énergétique supplémentaire. Il existe ainsi une complexité de mise en œuvre, une étanchéité délicate à maîtriser dans ces conditions opératoires compte-tenu du nombre important de liaisons faisant intervenir des pièces en mouvement, et un coût probablement conséquent induit par la pluralité de composants motorisés.

Des solutions de racleurs pour des échangeurs thermiques, en particulier utilisés pour des réacteurs d'oxydation supercritique, ont déjà été envisagées dans l'art antérieur, comme par exemple décrites dans les brevets américains US 5,100,560 A, US 6,054,057 A et US 5,461,648 A.

Cependant, les principes du mécanisme d'actionnement des racleurs ne sont pas entièrement satisfaisants. Il existe ainsi un besoin pour proposer une solution de racleur permettant de limiter la consommation énergétique et les contraintes d'étanchéité subies.

### EXPOSÉ DE L'INVENTION

L'invention a pour but de remédier au moins partiellement aux besoins mentionnés précédemment et aux inconvénients relatifs aux réalisations de l'art antérieur.

L'invention a ainsi pour objet, selon l'un de ses aspects, un échangeur thermique de type à surface raclée, caractérisé en ce qu'il comporte :
- un tube, dans lequel circule un fluide encrassant, comprenant une paroi interne, notamment entre les deux extrémités du tube, apte à être encrassée par le fluide encrassant,
- un système de raclage, disposé à l'intérieur du tube, apte à être en sensible contact, notamment permanent, avec la paroi interne du tube pour la racler et éliminer l'encrassement, notamment dans une zone de la paroi interne s'étendant sur plus de la majeure partie de l'étendue du tube entre ses deux extrémités,
- un système d'actionnement hydraulique du système de raclage, comprenant des moyens mécaniques de mise en mouvement, solidarisés au système de raclage, et des moyens de circulation d'un fluide pressurisé permettant l'entraînement des moyens mécaniques de mise en mouvement et ainsi la mise en mouvement du système de raclage contre la paroi interne du tube.

Par « permanent », on entend que le contact a lieu dans une zone de la paroi interne, s'étendant sur plus de la majeure partie de l'étendue du tube entre ses deux extrémités, aussi bien en l'absence de fonctionnement du système de raclage, c'est-à-dire sans déplacement de celui-ci, notamment par rotation ou oscillation, qu'en fonctionnement. Autrement dit, le contact n'est pas local sur la paroi interne du tube, par exemple par le biais d'un unique moyen de raclage présent à une extrémité d'un axe en déplacement, mais s'effectue simultanément en plusieurs points de contact contenus dans ladite zone d'étendue supérieure à la majeure partie de l'étendue du tube.

De plus, par « majeure partie », on entend plus de 50 % de l'étendue du tube entre ses extrémités, soit de la distance entre les deux extrémités du tube.

Grâce à l'invention, il peut être possible notamment d'éviter le recours à une motorisation pour entraîner le système de raclage, ce qui serait très compliqué pour certaines conditions de fonctionnement contraignantes (haute température autour de 600°C et haute pression autour de 300 bars). Il est également possible de relaxer les contraintes d'étanchéité entre la partie motrice classique et l'environnement de la partie entraînée du système de raclage, le fluide pressurisé étant compatible avec le fluide encrassant, et réciproquement.

L'échangeur thermique selon l'invention peut en outre comporter l'une ou plusieurs des caractéristiques suivantes prises isolément ou suivant toutes combinaisons techniques possibles.

L'échangeur thermique peut avantageusement être de type tubes-calandre, comportant un faisceau de tubes d'échange thermique parallèles entre eux et disposés à l'intérieur d'une enveloppe dénommée calandre. Chaque tube peut comprendre un système de raclage solidarisé à des moyens mécaniques de mise en mouvement.

Selon une première réalisation, les moyens mécaniques de mise en mouvement peuvent être des moyens rotatifs, par exemple de type hélice. Le système de raclage peut comporter notamment une vis sans fin et/ou des pales de raclage.

Les moyens mécaniques de mise en mouvement peuvent avantageusement comporter une turbine hydraulique de type Pelton ou Francis, ou autres.

De plus, un engrenage réducteur peut être disposé entre les moyens mécaniques de mise en mouvement et le système de raclage.

Selon une deuxième réalisation, les moyens mécaniques de mise en mouvement peuvent être des moyens oscillants, par exemple de type piston. Le système de raclage peut notamment comporter des plateaux annulaires de raclage.

L'échangeur thermique selon l'invention peut encore comporter un système d'efforts passifs, notamment un système élastique, solidarisé aux moyens mécaniques de mise en mouvement.

Par ailleurs, l'échangeur thermique selon l'invention peut comporter une came à actionnement permettant la mise en mouvement des moyens mécaniques de mise en mouvement. Il peut en outre comporter un arbre à came permettant le couplage entre au moins une came à actionnement et les moyens mécaniques de mise en mouvement.

Par ailleurs, le fluide encrassant peut préférentiellement être de la biomasse. De plus, le fluide pressurisé peut préférentiellement être de l'eau pressurisée. L'échangeur thermique peut avantageusement être apte à être utilisé dans un réacteur de gazéification de biomasse en eau supercritique.

Par ailleurs, l'invention a encore pour objet, selon un autre de ses objets, un réacteur de gazéification de biomasse en eau supercritique, caractérisé en ce qu'il comporte un échangeur thermique tel que défini précédemment.

La température de fonctionnement du réacteur peut être d'environ 600°C. La pression de fonctionnement du réacteur peut être d'environ 300 bars.

En outre, le réacteur peut comporter un circuit de recyclage du fluide en sortie de réacteur, le fluide pressurisé alimentant le système d'actionnement hydraulique provenant, en partie ou en totalité, du fluide obtenu en sortie de réacteur.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
La Figure 1 illustre, partiellement et en coupe, un premier exemple d'échangeur thermique conforme à l'invention, utilisé dans un réacteur de gazéification de biomasse en eau supercritique, avec actionnement de raclage de type rotatif,
La Figure 2 illustre, partiellement et en coupe, un deuxième exemple d'échangeur thermique conforme à l'invention, utilisé dans un réacteur de gazéification de biomasse en eau supercritique, avec actionnement du raclage de type oscillant,
La Figure 3 illustre, partiellement et en coupe, une variante de réalisation de l'échangeur thermique de la Figure 2
Les Figures 4 et 5 illustrent, partiellement et en coupe, deux variantes d'une troisième exemple d'échangeur thermique conforme à l'invention, et
Les Figures 6 et 7 illustrent, partiellement et en coupe, deux variantes d'un quatrième exemple d'échangeur thermique conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

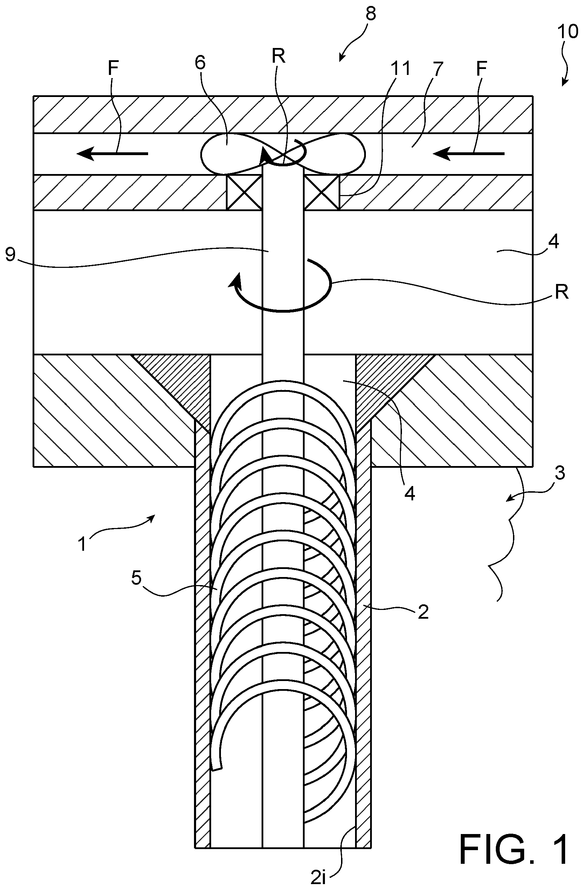

La figure 1 illustre un premier exemple d'échangeur thermique 1 utilisé dans un réacteur 10 de gazéification de biomasse en eau supercritique.

L'échangeur thermique 1 de type à surface raclée comporte une pluralité de tubes 2, dont un seul est représenté sur la figure 1, dans lesquels circule de la biomasse 4 encrassant la paroi interne 2i de chaque tube 2. Les tubes 2 sont disposés à l'intérieur d'une calandre 3, représentée ici partiellement.

Par ailleurs, un système de raclage 5 est disposé à l'intérieur du tube 2. Ce système de raclage 5 permet d'être au contact ou pratiquement au contact de la paroi interne 2i du tube 2 de sorte à pouvoir la racler et à éliminer l'encrassement.

De plus, conformément à l'invention, un système d'actionnement hydraulique 8 du système de raclage 5 est prévu. Ce système d'actionnement hydraulique 8 comporte des moyens mécaniques de mise en mouvement 6, solidarisés au système de raclage 5, et des moyens de circulation d'un fluide pressurisé 7, ici de l'eau pressurisée circulant selon les flèches F, permettant l'entraînement des moyens mécaniques de mise en mouvement 6 et ainsi la mise en mouvement du système de raclage 5 contre la paroi interne 2i du tube 2.

Dans cet exemple précisément, le raclage est obtenu par rotation. Ainsi, les moyens mécaniques de mise en mouvement 6 comportent une hélice rotative selon un mouvement représenté par les flèches R sur la figure 1. Cette hélice 6, entraînée par une force hydromotrice, est montée sur un arbre rotatif 9 sur lequel est également montée une vis sans fin formant le système de raclage 5. En variante, des pales de raclage pourraient être utilisées au lieu de la vis sans fin.

Il est ainsi à noter que le contact du système de raclage 5 sur la paroi interne 2i du tube 2 est permanent dans une zone de la paroi interne 2i s'étendant sur plus de la majeure partie, soit plus de 50 %, de l'étendue du tube 2 entre ses extrémités haute et basse. En particulier, indépendamment du fonctionnement ou non du système de raclage 5 par rotation, la vis sans fin est au contact permanent de la paroi interne 2i dans une zone de celle-ci qui, sur la figure 1, correspond pratiquement à la hauteur totale du tube 2. Une telle réalisation est ainsi différente d'un contact localisé entre le moyen de raclage et le tube qui ne concernerait qu'une très faible zone de la paroi interne 2i. Avantageusement, le raclage est amélioré par le fait d'avoir un contact permanent rendu possible sur plus de la majeure partie de l'étendue du tube 2.

Ainsi, l'invention utilise avantageusement un mécanisme d'actionnement du système de raclage 5 par un système d'actionnement hydraulique 8 permettant de remplacer les moteurs électriques de mise en rotation ou oscillants de l'art antérieur.

En exerçant une action de raclage mécanique sur la paroi interne 2i d'échange thermique affectée par un encrassement consécutif au dépôt de matières indésirables de la biomasse 4 (fluide entrant), il est possible de maintenir le transfert thermique entre les fluides caloporteurs traversant le réacteur 10 à un niveau optimal.

Cette action de raclage mécanique de la surface d'échange thermique interne des tubes 2 peut être obtenue par le biais d'un système de raclage 5 sous la forme d'une vis sans fin, comme illustrée sur la figure 1, insérée dans le tube 2, ou bien encore par des pales de raclage. Le faible jeu, voire le quasi contact, entre la pointe du filetage de la vis sans fin et la paroi interne 2i du tube 2, permet à la vis, lorsqu'elle est mise en rotation selon son axe longitudinal, de racler et de décoller l'encrassement formé sur la paroi interne 2i du tube 2.

Compte-tenu des conditions d'environnement, pouvant être particulièrement contraignantes (température de 600°C et pression de 300 bars), auxquelles est soumis l'échangeur thermique 1, il est compliqué et peu judicieux d'envisager l'entraînement de la vis sans fin avec un moteur externe dont le couple généré serait transmis par l'intermédiaire d'un arbre traversant l'échangeur thermique. En effet, la température élevée du réacteur 10 impliquerait soit l'utilisation d'un moteur conçu pour résister à ces conditions thermiques, soit de le déporter suffisamment loin des surfaces chaudes, ce qui n'est pas sans risque pour l'intégrité de l'arbre, avec un risque de flambage notamment. D'autre part, l'utilisation d'un moteur externe constitue un autre inconvénient puisqu'il impliquerait pour le passage de chaque arbre actionnant les vis sans fin, la gestion d'une étanchéité entre l'intérieur fortement pressurisé (pression supérieure à 300 bars) du circuit du réacteur 10 traversé par le fluide encrassant et l'atmosphère. Cet inconvénient est d'autant plus délicat à maîtriser que l'étanchéité à assurer au niveau du passage de chaque arbre doit être également maintenue en fonctionnement, i.e. lorsque l'arbre est en rotation aussi bien lors des phases de fonctionnement au régime nominal, que lors des phases de démarrage à plus basses températures (gestion des dilatations thermomécaniques entre les composants).

Ces constats révèlent donc l'intérêt de l'invention qui prévoit un système d'actionnement hydraulique 8, interne au réacteur 10. Ce système est en effet bien plus adapté et indiqué pour assurer l'actionnement du système de raclage 5 de la paroi interne 2i du tube 2 de l'échangeur thermique 1, compte-tenu des contraintes d'environnement pouvant être subies.

Il est à noter que les moyens mécaniques de mise en mouvement 6 peuvent encore comporter une turbine hydraulique de type Pelton ou Francis. Ainsi, la conversion du travail de détente de l'eau pressurisée 7 en force motrice actionnant l'arbre 9 et la vis sans fin 5 peut être assurée par cette turbine hydraulique 6.

Il est de plus possible que suivant certains aspects dimensionels de l'échangeur thermique 1, tels que diamètre interne et longueur du tube 2, et suivant les propriétés intrinsèques d'encrassement du fluide encrassant 4, un engrenage réducteur 11 puisse être avantageusement installé entre l'organe de détente formé par les moyens mécaniques de mise en mouvement 6 et le système de raclage 5, ici la vis sans fin, de sorte à augmenter le couple exercé sur l'axe de la vis sans fin tout en réduisant sa vitesse de rotation. L'intérêt d'une telle configuration est d'augmenter la contrainte de cisaillement de la vis pour favoriser le raclage de la paroi interne 2i d'échange thermique.

L'axe de rotation des moyens mécaniques de mise en mouvement 6, formant l'organe de détente, dans le cas d'une turbine hydraulique de type Pelton ou Francis par exemple, peut être coaxial et en prise directe avec l'axe longitudinal de la vis sans fin 5. Dans l'éventualité où un engrenage réducteur 11 est installé à l'interface entre les moyens mécaniques 6 et l'arbre 9 de la vis sans fin 5 pour augmenter le couple de ce dernier en réduisant sa vitesse, plusieurs options sont possibles dont certaines qui permettraient de conserver un parallélisme entre les deux axes, à savoir l'axe de rotation de la turbine 6 et l'axe longitudinal de la vis sans fin 5, et ce pour un gain en compacité.

Le réacteur 10 peut comporter un distributeur et/ou collecteur de fluide encrassant 4 surmonté d'un circuit de détente comprenant le fluide pressurisé 7 et les moyens mécaniques 6 de mise en mouvement formant l'organe de détente. En effet, cet agencement offre plusieurs avantages en matière de conception et de gestion de la pression et de la tenue mécanique du système. Selon cette conception, la séparation physique entre le circuit de détente et le distributeur et/ou collecteur n'est soumise qu'à un écart de pression relatif à la différence de pression entre les deux circuits, allégeant de ce fait les contraintes de conception sur cette interface. La gestion de la pression entre le circuit de détente, le circuit de fluide encrassant entrant et l'atmosphère est dans cette configuration reportée sur l'enveloppe du système à l'interface avec l'atmosphère. Le positionnement en amont du circuit de détente permet d'autre part de réduire les contraintes d'étanchéité entre les deux circuits, puisque réduire l'écart de pression aux bornes des traversées étanches conduit à réduire le niveau et/ou le débit de fuite de cette liaison.

Il est à noter que, selon cette conception, il n'y a plus à gérer l'étanchéité de pièces en mouvement interfacées entre un ou plusieurs circuits fortement pressurisés, notamment biomasse entrante ou eau supercritique, et l'atmosphère de deux distributeurs et/ou collecteurs.

Il peut en outre être mentionné qu'un éventuel débit de fuite entre le circuit de détente (moyens mécaniques 6 et fluide pressurisé 7) et le circuit de fluide encrassant 4 entrant n'est pas problématique dans la mesure où les fluides sont similaires, étant majoritairement constitués d'eau, et non réactifs.

De plus, il est possible d'avoir un circuit de détente sur un plan parallèle superposé au-dessus de la plaque tubulaire de l'échangeur thermique 1, simplifiant de ce fait la conception et l'intégration du système de raclage 5 alimenté par la force motrice hydraulique générée par la détente de l'eau supercritique produite par le procédé.

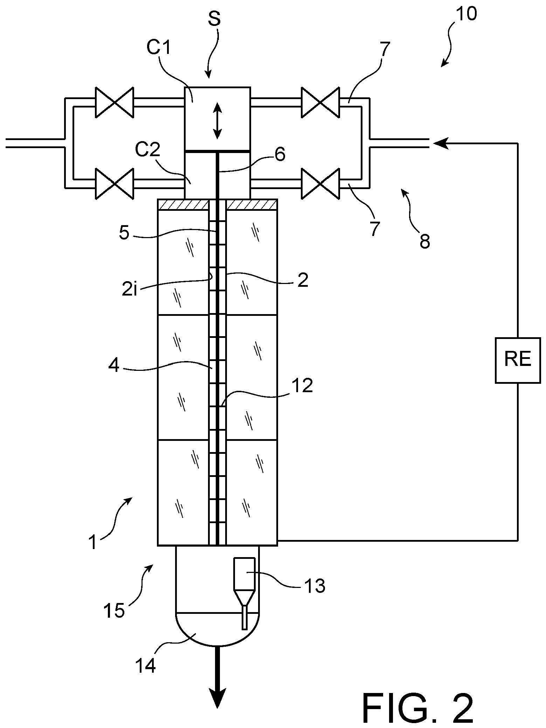

La figure 2 illustre un deuxième exemple d'échangeur thermique 1 conforme à l'invention avec un fonctionnement du système de raclage 5 de type oscillant.

Plus précisément, dans cet exemple, les moyens mécaniques de mise en mouvement 6 sont des moyens oscillants, ici de type piston, et le système de raclage 5 comporte des plateaux annulaires de raclage 12.

Sur cette figure 2, le cyclone 13 du réacteur 10 et les sels solides déposés 14 sont représentés, de même que le gazéifieur 15 à une pression de 300 bars et une température comprise entre 500 et 700°C.

A l'inverse du premier exemple, le mécanisme d'actionnement du système de raclage 5 n'est ici plus rotatif mais concerne la réalisation d'un mouvement oscillant, notamment d'un mouvement oscillant par translation. Les plateaux annulaires de raclage 12 peuvent être percés ou pleins. Leur mouvement oscillant permet de nettoyer la paroi interne 2i du tube 2.

Il est ainsi à noter également que le contact du système de raclage 5 sur la paroi interne 2i du tube 2 est permanent dans une zone de la paroi interne 2i s'étendant sur plus de la majeure partie, soit plus de 50 %, de l'étendue du tube 2 entre ses extrémités haute et basse. En particulier, indépendamment du fonctionnement ou non du système de raclage 5 par oscillation, les plateaux annulaires de raclage 12 sont au contact permanent de la paroi interne 2i dans une zone de celle-ci qui, sur la figure 2, correspond pratiquement à la hauteur totale du tube 2. Une telle réalisation est ainsi différente d'un contact localisé entre le moyen de raclage et le tube qui ne concernerait qu'une très faible zone de la paroi interne 2i. Avantageusement, le raclage est amélioré par le fait d'avoir un contact permanent rendu possible sur plus de la majeure partie de l'étendue du tube 2.

Plutôt que d'alimenter une hélice ou turbine comme dans l'exemple de la figure 1, le fluide pressurisé 7, pouvant être le fluide procédé recyclé, actionne un système hydraulique S constitué de deux chambres C1 et C2 indépendantes et alimentées alternativement. Ce fonctionnement alternatif permet de générer le mouvement oscillant du système de raclage 5 de type piston.

En outre, de façon privilégiée et comme symbolisé par la flèche RE sur la figure 2, le fluide pressurisé 7 provient, en partie ou en totalité, du fluide en sortie de réacteur 10, à une pression de 300 bars. Ce fluide recyclé est ainsi utilisé dans le mécanisme d'actionnement du système de raclage 5, ce qui est une amélioration vis-à-vis des bilans énergétiques globaux.

En effet, le procédé de gazéification dans lequel intervient ce réacteur 10 produit, en sortie, un débit d'eau claire pressurisée. Avantageusement, on peut valoriser la force motrice de l'eau pressurisée formée par le procédé pour alimenter le système d'actionnement hydraulique 8.

Par ailleurs, il faut noter la possibilité de réaliser une plaque de distribution de fluide permettant d'actionner chaque système de raclage 5 en parallèle dans le cas de multitubes avec systèmes de raclage 5.

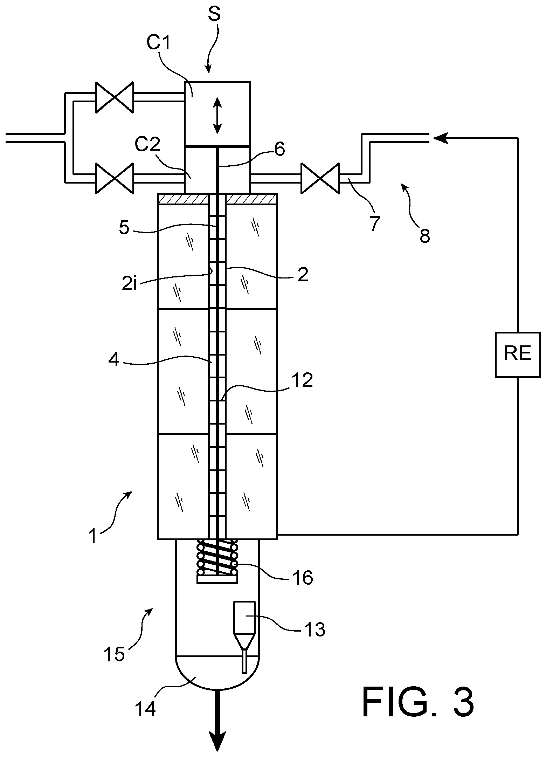

La figure 3 illustre une variante de réalisation de l'échangeur thermique 1 de la figure 2. En effet, dans l'exemple de réalisation de la figure 2, le fluide pressurisé 7 actionne un système hydraulique S constitué de deux chambres C1 et C2 indépendantes, et soumet le système de raclage 5 à des efforts de traction (pour la remontée) et de flexion (pour la descente).

Or, dans un souci d'optimisation mécanique où l'on souhaiterait ne soumettre ce système de raclage 5 qu'à des efforts de traction, la réalisation de la figure 3 propose un échangeur thermique 1 où la remontée du système de raclage 5 est assurée par un système de deux chambres C1 et C2 identiques aux précédentes, mais la descente se fait par le biais d'un système d'efforts passifs 16, par exemple un système élastique, notamment un ressort 16 dans le cas représenté.

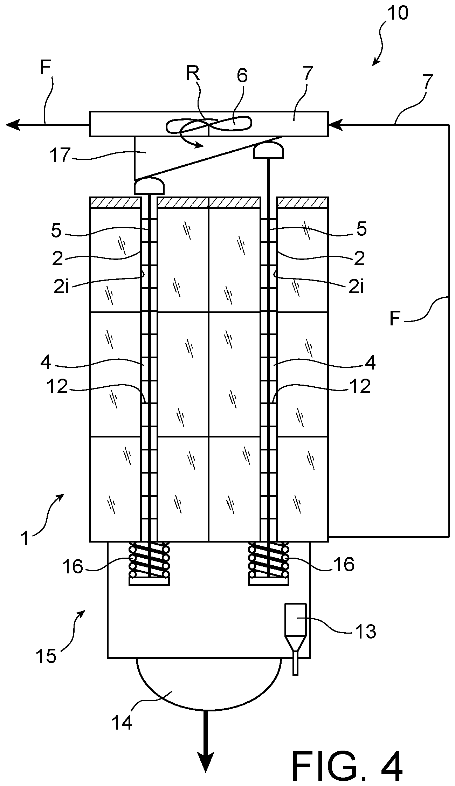

Par ailleurs, la figure 4 illustre, partiellement et en coupe, un troisième exemple de réalisation d'un échangeur thermique 1 conforme à l'invention.

Dans cet exemple, une came à actionnement radial 17 est prévue pour actionner deux systèmes de raclage 5 disposés côte à côte. Le travail de la came 17 est produit par la détente du fluide pressurisé 7 à travers une turbine 6, par exemple de type Pelton ou Francis, ou autres, semblable à celle décrite en référence à la figure 1. Pour ce faire, la came 17 est couplée avec la turbine 6. Le fonctionnement de ce système est alors en partie similaire au système de pressurisation des nettoyeurs haute pression.

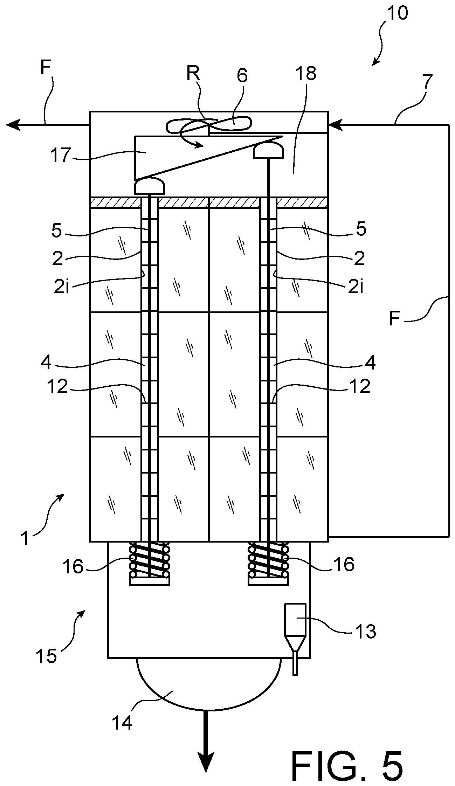

Dans la variante représentée à la figure 5, la came à actionnement radial 17 et la partie permettant d'opérer l'actionnement des deux systèmes de raclage 5 sont situés dans une chambre étanche 18 traversée par le fluide pressurisé 7, de sorte que l'écart de pression aux bornes des systèmes de raclage 5 soit réduit.

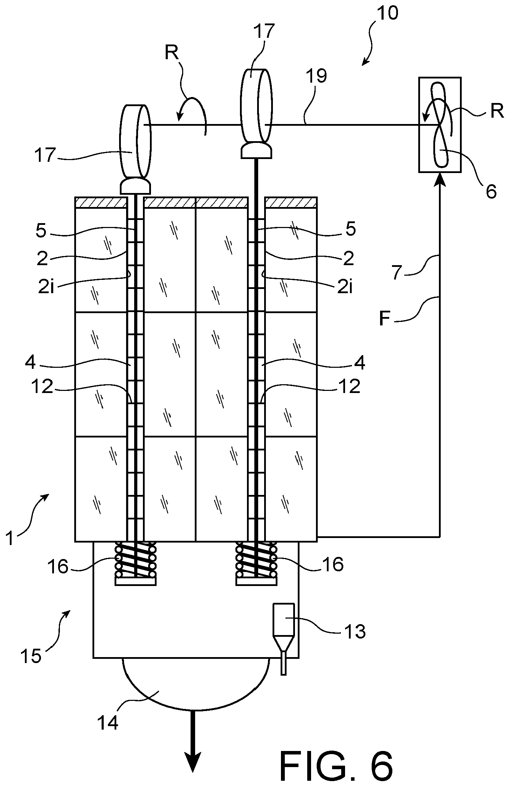

La figure 6 illustre, partiellement et en coupe, un quatrième exemple de réalisation d'un échangeur thermique 1 conforme à l'invention.

Dans cet exemple, un arbre à cames 19 est utilisé, sur lequel sont montées deux cames 17 actionnant deux systèmes de raclage 5.

La turbine de détente 6 est couplée à l'arbre à came 19, Le fluide pressurisé 7 est ainsi détendu pour fournir un travail suffisant permettant d'actionner l'arbre à came 19 en rotation.

Plus particulièrement, le fluide pressurisé 7 est admis, puis refoulé de la chambre de pressurisation de la turbine de détente 6, dont le travail produit actionne en translation les pistons des systèmes de raclage 5.

La mise en mouvement de l'arbre à cames 19 peut être assurée par la détente du fluide pressurisé 7 à travers la turbine 6, comme représenté. En variante, un système combinant came et soupapes tarées peut être utilisé.

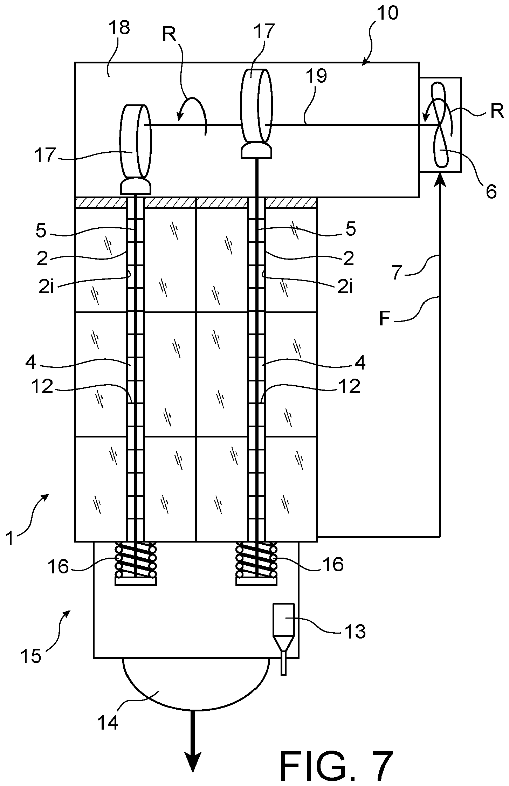

Par ailleurs, dans la variante de réalisation de la figure 7, une chambre étanche 18 est prévue, comme précédemment décrit pour la figure 5, de sorte que l'écart de pression aux bornes des systèmes de raclage 5 soit réduit.

Il est à noter que de façon commune à tous les exemples de réalisation décrits précédents, le raclage des parois internes 2i des tubes 2 est obtenu par la mise en mouvement des systèmes de raclage 5, eux-mêmes actionnés par les moyens mécaniques de mise en mouvement 6 soumis aux moyens de circulation du fluide pressurisé 7 des systèmes d'actionnement hydrauliques 8. Autrement dit, le fluide pressurisé 7 permet le déplacement des moyens mécaniques de mise en mouvement 6, sous forme de tubine dans les exemples des figures 1 et 4 à 7, ou sous forme de piston dans les exemples des figures 2 et 3, qui permet alors le déplacement des systèmes de raclage 5. Dans les exemples des figures 4 à 7, l'utilisation de cames d'actionnement 17 couplées aux turbine 6 permet la mise en mouvement oscillant par translation des systèmes de raclage 5.

Bien entendu, l'invention n'est pas limitée aux exemples de réalisation qui viennent d'être décrits. Diverses modifications peuvent y être apportées par l'homme du métier.

## Revendications

1. Echangeur thermique (1) de type à surface raclée, **caractérisé en ce qu'**il comporte :
- un tube (2), dans lequel circule un fluide encrassant (4), comprenant une paroi interne (2i) entre les deux extrémités du tube (2), apte à être encrassée par le fluide encrassant (4),
- un système de raclage (5), disposé à l'intérieur du tube (2), apte à être en sensible contact permanent avec la paroi interne (2i) du tube (2) pour la racler et éliminer l'encrassement, dans une zone de la paroi interne (2i) s'étendant sur plus de la majeure partie de l'étendue du tube (2) entre ses deux extrémités,
- un système d'actionnement hydraulique (8) du système de raclage (5), comprenant des moyens mécaniques de mise en mouvement (6), solidarisés au système de raclage (5), et des moyens de circulation d'un fluide pressurisé (7) permettant l'entraînement des moyens mécaniques de mise en mouvement (6) et ainsi la mise en mouvement du système de raclage (5) contre la paroi interne (2i) du tube (2).

2. Echangeur thermique selon la revendication 1, **caractérisé en ce qu'**il est de type tubes-calandre, comportant un faisceau de tubes d'échange thermique (2) parallèles entre eux et disposés à l'intérieur d'une enveloppe dénommée calandre (3), chaque tube (2) comprenant un système de raclage (5) solidarisé à des moyens mécaniques de mise en mouvement (6).

3. Echangeur thermique selon la revendication 1 ou 2, **caractérisé en ce que** les moyens mécaniques de mise en mouvement (6) sont des moyens rotatifs, par exemple de type hélice, le système de raclage (5) comportant notamment une vis sans fin et/ou des pales de raclage.

4. Echangeur thermique selon la revendication 3, **caractérisé en ce que** les moyens mécaniques de mise en mouvement (6) comportent une turbine hydraulique de type Pelton ou Francis.

5. Echangeur thermique selon la revendication 3 ou 4, **caractérisé en ce qu'**un engrenage réducteur (11) est disposé entre les moyens mécaniques de mise en mouvement (6) et le système de raclage (5).

6. Echangeur thermique selon la revendication 1 ou 2, **caractérisé en ce que** les moyens mécaniques de mise en mouvement (6) sont des moyens oscillants, par exemple de type piston, le système de raclage (5) comportant notamment des plateaux annulaires de raclage.

7. Echangeur thermique selon la revendication 6, **caractérisé en ce qu'**il comporte un système d'efforts passifs (16), notamment un système élastique, solidarisé aux moyens mécaniques de mise en mouvement (6).

8. Echangeur thermique selon la revendication 6 ou 7, **caractérisé en ce qu'**il comporte une came à actionnement (17) permettant la mise en mouvement des moyens mécaniques de mise en mouvement (6).

9. Echangeur thermique selon la revendication 8, **caractérisé en ce qu'**il comporte un arbre à came (19) permettant le couplage entre au moins une came à actionnement (17) et les moyens mécaniques de mise en mouvement (6).

10. Echangeur thermique selon l'une quelconque des revendications précédentes, **caractérisé en ce que** le fluide encrassant (4) est de la biomasse et **en ce que** le fluide pressurisé (7) est de l'eau pressurisée, l'échangeur thermique (1) étant apte à être utilisé dans un réacteur (10) de gazéification de biomasse en eau supercritique.

11. Réacteur (10) de gazéification de biomasse en eau supercritique, **caractérisé en ce qu'**il comporte un échangeur thermique (1) selon l'une quelconque des revendications précédentes.

12. Réacteur selon la revendication précédente, **caractérisé en ce que** la température de fonctionnement du réacteur est d'environ 600°C et **en ce que** la pression de fonctionnement du réacteur est d'environ 300 bars.

13. Réacteur selon la revendication 11 ou 12, **caractérise en ce que** le réacteur (10) comporte un circuit de recyclage du fluide en sortie de réacteur (10), le fluide pressurisé (7) alimentant le système d'actionnement hydraulique (8) provenant, en partie ou en totalité, du fluide obtenu en sortie de réacteur (10).
